# EUROPEAN PATENT SPECIFICATION

(11) **EP 4 056 368 B1**
(45) Date of publication and mention of the grant of the patent: **10.01.2024**
(21) Application number: 22157527.7
(22) Date of filing: 18.02.2022
(51) Int. Cl.: B32B 27/10, B32B 27/36, B32B 3/08, B65D 75/32, B32B 29/00, B65D 1/34, B65D 1/46

(54) **FOOD CONTAINER**
LEBENSMITTELBEHÄLTER
RÉCIPIENT ALIMENTAIRE

(30) Priority: 03.03.2021 CH 2342021
(43) Date of publication of application: 14.09.2022
(73) Proprietor: Neupack Swiss SA, 6534 San Vittore (CH)
(72) Inventor: Anghileri, Giuseppe, 23900 Lecco (IT); Anghileri, Alessandro, 22100 Como (IT); Anghileri, Pietro, 22035 Canzo (IT)
(74) Representative: P&TS SA (AG, Ltd.)

(56) References cited:
- EP-A1- 1 440 890
- EP-A1- 3 604 175
- US-A1- 2007 194 029
- US-A1- 2013 260 106

## Description

### Technical domain

The present invention concerns a food container suitable for the preparation and cooking of aliments in an oven, and that is biodegradable and disposable by a composting process.

### Related art

A very large variety of containers has been developed and proposed to satisfy the diverse requirements of the food industry. Many containers have the general shape of a tray, of approximately rectangular or square outline, and can be closed by means of a flat lid or a film. Square and rectangular trays are in many applications preferable to other shapes because they can be stacked and arranged compactly.

Several materials have been used to this purpose including: aluminium foil, polymers, and paper or paperboard. Paper-based containers may be made water- and grease-resistant by the application of suitable polymeric films. Films of polylactide, also known as polylactic acid or PLA have been used in these applications, as disclosed for example by European patent application EP1094944.

Paper-based containers are appreciated for their environmental qualities, can be printed on their outer side, and can be used in ovens and refrigerators. They are often obtained by a thermal forming process between heated dies, whereby a combination of heat, pressure, and steam from the paperboard's intrinsic moisture produces a deformation and reorganization of the fibres that results in a container with the desired shape.

Structural rigidity of the paperboard tray is provided by the shape. Where the originally flat sheet of paperboard is drawn into the die, for example in the side walls and corners of a tray, the paperboard is wrinkled or pleated, which also contributes to the overall rigidity.

When the rigidity of the tray is not sufficient, for example when the tray is sealed by a high-stretch film, it is known to reinforce the tray by adding a reinforcement to its peripheral rim, as disclosed for example by EP 2338800 A1, US 2013/260106 A1, EP 1440890 A1, EP 3604175 A1, US 2007/194029 A1. Such reinforcements, however, add a manufacturing step and are not always effective.

Food container such as those disclosed herein are used for the industrial preparation and conditioning of foodstuff, mostly in automatic production lines. Since they are light and relatively fragile, their manipulation with automatic equipment needs special care.

### Short disclosure of the invention

An aim of the present invention is the provision of a paperboard container for food that overcomes the shortcomings and limitations of the state of the art.

Another aim of the invention is the provision of a food container that present a satisfactory stiffness, is ovenable, biodegradable, and compostable.

According to the invention, these aims are attained by the object of the attached claims, and especially by a container for food having a flat rim or flange, made by thermoforming a first paper-based board having a coextruded barrier layer of compostable polymer, with angular reinforcements thermally welded under the corners of the flat rim, wherein the angular reinforcements are flat corner-shaped elements of a second paper-based board having a coextruded weldable layer of compostable polymer.

The dependent claims relate to useful optional aspects of the invention, such as a tray of essentially rectangular or square shape, with four reinforced corners, the fact that the compostable polymer of the barrier layer and/or of the weldable layer is polylactic acid, the barrier layer with a thickness comprised between 10 µm and 60 µm and the weldable layer with a thickness superior to the thickness of the barrier layer.

The second paper-based board, for the reinforcements, may have a grammage comprised between 200 g/m2 and 800 g/m2 and its thickness is such that when the tray is stacked on a second identical tray, the angular reinforcements rest on the flat rim of the second tray below.

The shape of the reinforcements contributes largely to the rigidity of the container. The inventors have found that a shape with two straight arms protruding at right angle for a middle part is most effective when the middle part is wider than the arms. When the middle part is a rounded corner, it is advantageous that the inner radius is larger than the outer radius.

Another aspect of the invention is a method of manufacturing a container for food comprising: providing a first paper-based board with a coextruded barrier layer of compostable polymer; thermoforming the first paper-based board into a container with a flat rim; providing a second paper-based board having a coextruded weldable layer of compostable polymer; cutting four angular reinforcements from the second paper board; placing the four angular reinforcements below the four corners of the thermally welded under the corners of the flat rim, the weldable layer of compostable polymer in contact with a lower face of the rim; and welding the reinforcements to the container by the application of heat and pressure.

### Short description of the drawings

Exemplar embodiments of the invention are disclosed in the description and illustrated by the drawings in which:
**Figure 1** illustrates schematically a tray for food according to the invention, view from below.
**Figures 2a** and **2b** show an angular reinforcement.
**Figure 3** shows the tray of figure 1 in perspective.
**Figure 4** shows a stack of trays for food according to the invention.
**Figure 5a** shows the stack of trays in section, and
**Figure 5b** is an enlarged detail of figure 5a.

### Examples of embodiments of the present invention

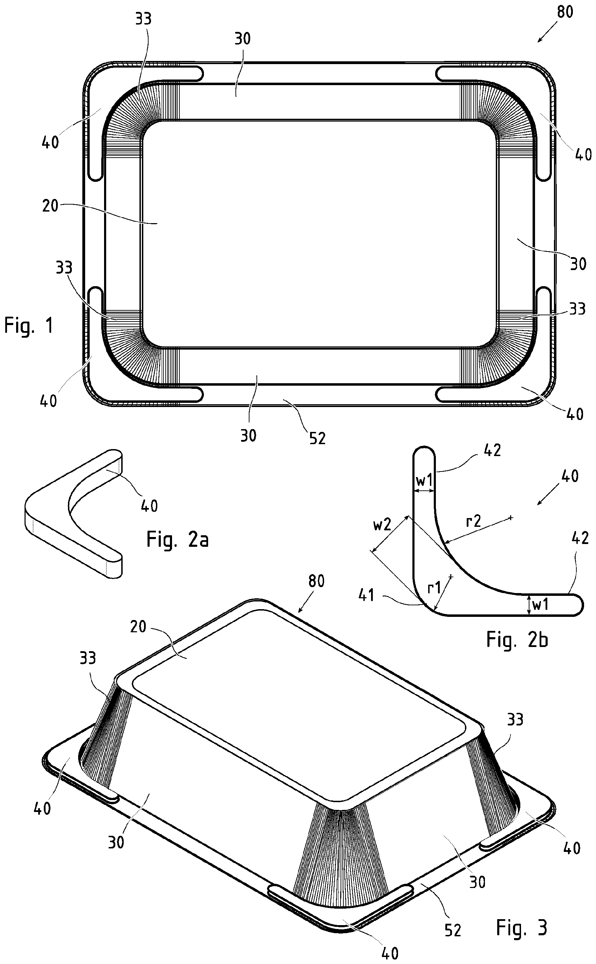

**Figure 1** shows a food container according to the invention, seen from below and **figure 3** illustrates the same container in perspective. In the preferred embodiment the container has the general shape of a tray, but other shapes may be envisioned, according to the need, such as a bowl or a plate. The tray may have only one hollow compartment as illustrated, or several, if required.

Referring always to figures 1 and 3, the container **80** has a flat bottom **20** and a flat rim or flange **50,** united by side walls **30.** The container **80** is manufactured by heat-pressing a paper-based board as it is known in the art. Those parts of the board that had to reduce their dimension in the forming process develop a corrugated or pleated structure **33,** as it is visible in the corner regions of the tray **80.**

The material used to produce the container **80** can be any food-grade paper-based material of suitable thickness, such as chemical pulp, Kraft pulp, mechanical pulp, chemi-thermomechanical pulp and so on, and may comprise several superposed plies or layers to achieve the desired grammage and mechanical properties. Good results have been obtained with the paperboard "Trayforma" from the company "Storaenso" at a grammage of 170 gr/m2, but many other products are available and comprised in the scope of the invention. Importantly the material used to produce the container **80** has a barrier layer of a polymer that is coupled to the paperboard by coextrusion to provide resistance to humidity and grease. PLA (polylactic acid or polylactide) is a thermoplastic biopolymer that is suitable to this application and is compostable in industrial composting plants. PLA films are available in different grades of heat resistance and may be used in conventional and microwave ovens. PLA may be pigmented and include additives such as adhesives.

The container of figures 1 and 3 has a certain amount of rigidity due to its shape, but this is not sufficient in many applications. To improve the rigidity, four angular reinforcements **40** are affixed to the underside **52** of the flat rim, at the four corners thereof. The angular reinforcements **40** have preferably a coextruded layer of a weldable polymer. The reinforcement **40** are united to the tray **80** by the simultaneous application of heat and pressure, whereby the weldable layer becomes united to the underside **52** of the tray's rim.

If the material of the tray **80** has been selected for being compostable and bio-friendly, these qualities will be found preferably also in the reinforcements **40.** Thus, the reinforcements may be cut out of a paper-based board, although not necessarily of the same material as that used in the tray because, among other things, the reinforcement do not have to withstand a thermoforming step. It is also desirable, for reasons that will be clearer in the following, that the reinforcements **40** be considerably thicker than the board used to produce the body of the tray **80.**

The weldable polymer layer in the reinforcement may be a PLA layer, preferably at a thickness higher than that of the barrier layer, to ensure a superior weldability, for example 60 µm or more. The area of the rim on which the reinforcements **40** are applied is generally creased or pleated due to the forming process, and this contributes to the stiffness of the assembly.

The invention is amenable to several variants. The union between the underside **52** of the rim and the angle reinforcement, for example, may be realized with any suitable means or adhesive rather than by thermal welding.

The food container thus produced and described is resistant to microwave oven and conventional oven at the temperatures normally encountered in cooking (200°C), without alterations in shape and aspect.

**Figures 2a** and **2b** show in more detail the angular reinforcement elements **40.** The thickness of this element is not to scale but has been chosen for better visibility. In embodiments, the angular reinforcements **40** may have a thickness of 1 mm, or more. The shape of the reinforcement is chosen to enhance the reinforcement effect. An important feature to this end is the width of the reinforcement that is not constant. The reinforcement has a central angular part **41,** from which extend the straight arm **42** that follow approximately the edges of the container **80.** the central angular part **81** is sensibly wider than the arms (width w1 vs width w2 in the drawing). This configuration provides a higher reaction against the deforming forces and the stiffening effect on the container is thus considerably more pronounced. This can be obtained, as in the example shown, by rounding the angle of the reinforcement element **40** with different radii, the radius r2 of the inner edge being sensibly larger than the radius r1 of the outer edge.

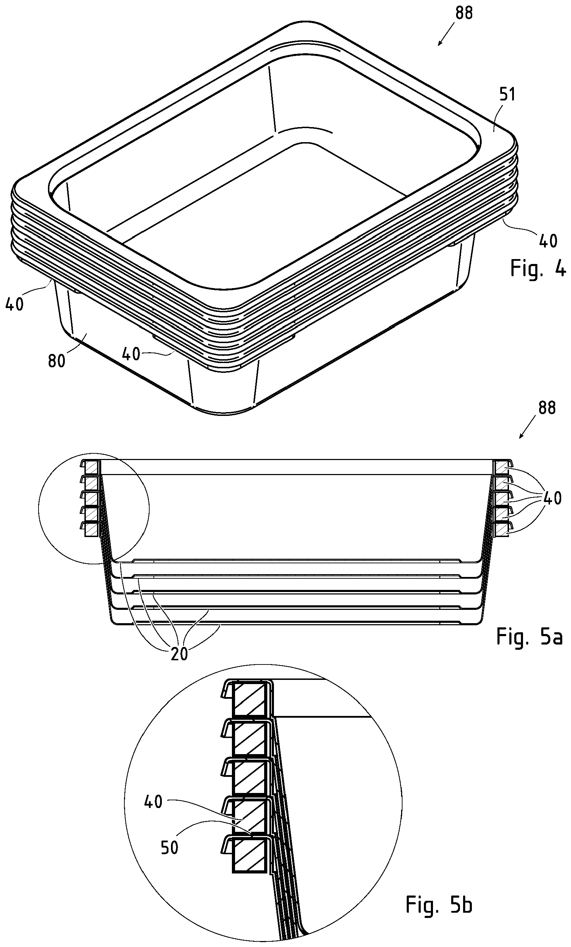

**Figures 4, 5a** and **5b** illustrate another useful feature of the invention. The thick reinforcement elements **40** are configured such that when the containers **80** are stacked, the reinforcement elements 40 of a tray rest on the flat rim **50** of the immediately lower tray and the bottom parts **20** of the trays do not touch. Understandably, in some realizations of the invention the sides and bottom of the stacked tray may touch at some point due to the unavoidable dimensional tolerances, but such accidental contacts have no consequences.

In these drawings the thickness of the angular reinforcement is not to scale, as before. In concrete embodiments, the reinforcement elements **40** will have a thickness that is adequate to provide the desired stiffness and ease of stacking, for example 1 mm. Higher thicknesses are not excluded, however. In this way, the stack is much more orderly than with conventional trays and the trays cannot wedge together or arrange themselves askew, which would compromise the stability of the stack. Thanks to this improvement, the containers **80** of the invention are easier to process in automatic plants.

### Reference signs

- 20: bottom
- 30: side wall
- 33: corrugated/pleated region
- 40: reinforcement
- 41: angle part
- 42: straight arm
- 50: flat rim
- 51: rim, upper surface
- 52: rim, lower surface
- 80: food container or tray
- 88: stack of containers
- r1: radius of the outer rounded corner
- r2: radius of the inner rounded corner
- w1: width of the straight arms
- w2: width of the angle part

## Claims

1. A container (80) for food having a concave compartment or receptacle for receiving foodstuff and a flat rim (50), made by thermoforming a first paper-based board having a coextruded barrier layer of polymer, with a plurality of angular reinforcements (40) thermally welded under the corners of the flat rim (50), wherein the angular reinforcements (40) are flat corner-shaped elements of a second paper-based board having a coextruded weldable layer of polymer.

2. The container (80) of the preceding claim, shaped as a tray having an essentially rectangular or square shape.

3. The container (80) of any one of the preceding claims, wherein the polymer of the barrier layer and/or of the weldable layer is polylactic acid.

4. The container (80) of any one of the preceding claims, wherein the barrier layer has a thickness comprised between 10 µm and 60 µm.

5. The container (80) of the preceding claim, wherein the weldable layer has a thickness superior to the thickness of the barrier layer.

6. The container (80) of any one of the preceding claims, wherein the second paper-based board has a grammage comprised between 200 g/m2 and 800 g/m2.

7. The container (80) of any one of the preceding claims, wherein the angular reinforcements (40) have an outer rounded corner and an inner rounded corner.

8. The container (80) of the preceding claim, wherein a radius (r1) of the outer rounded corner is less than a radius (r2) of the inner rounded corner.

9. The container (80) of any one of the preceding claims, wherein the angular reinforcements (40) have two straight arms (42) with a first width (w1) extending at essentially right angle from an angle part (41) with a second width (w2) larger than the first width.

10. The container (80) of any one of the preceding claims, wherein the angular reinforcements (40) have a thickness such that when the container is stacked on a second identical container, the angular reinforcements (40) of the container rest on the flat rim (50) of the second container.

11. A method of manufacturing a container for food (80) comprising:
- providing a first paper-based board with a coextruded barrier layer of compostable polymer,
- thermoforming the first paper-based board into a container (80) with a flat rim (50),
- providing a second paper-based board having a coextruded weldable layer of compostable polymer,
- cutting a plurality of angular reinforcements (40) from the second paper board,
- thermally welding the angular reinforcements (40) under the flat rim (50), the weldable layer of compostable polymer in contact with a lower face of the rim, by the application of heat and pressure.

12. The method of claim 11, wherein the compostable polymer of the barrier layer and/or of the weldable layer is polylactic acid.

13. The method of any one of claims 11-12, wherein the weldable layer has a thickness superior to the thickness of the barrier layer.

14. The method of any one of claims 11-13, wherein the second paper-based board has a grammage comprised between 200 g/m2 and 800 g/m2.

## Patentansprüche

1. Behälter (80) für Lebensmittel mit einem konkaven Fach oder Gefäß zur Aufnahme von Nahrungsmitteln und einem flachen Rand (50), hergestellt durch Thermoformen eines ersten papierbasierten Kartons mit einer koextrudierten Sperrschicht aus Polymer, mit einer Vielzahl von winkelförmigen Verstärkungen (40), die unter den Ecken des flachen Randes (50) thermisch verschweißt sind, wobei die winkelförmigen Verstärkungen (40) flache eckenförmige Elemente eines zweiten papierbasierten Kartons mit einer koextrudierten schweißbaren Schicht aus Polymer bilden.

2. Der Behälter (80) nach dem vorhergehenden Anspruch, geformt als Schale mit einer im Wesentlichen rechteckigen oder quadratischen Form.

3. Der Behälter (80) nach einem der vorhergehenden Ansprüche, wobei das Polymer der Sperrschicht und/oder der schweißbaren Schicht Polylactid ist.

4. Der Behälter (80) nach einem der vorhergehenden Ansprüche, wobei die Sperrschicht eine Dicke zwischen 10 µm und 60 µm aufweist.

5. Der Behälter (80) nach dem vorhergehenden Anspruch, wobei die schweißbare Schicht eine Dicke aufweist, die größer ist als die Dicke der Sperrschicht.

6. Der Behälter (80) nach einem der vorhergehenden Ansprüche, wobei der zweite papierbasierte Karton ein Flächengewicht zwischen 200 g/m2 und 800 g/m2 aufweist.

7. Der Behälter (80) nach einem der vorhergehenden Ansprüche, wobei die winkelförmigen Verstärkungen (40) eine äußere abgerundete Ecke und eine innere abgerundete Ecke aufweisen.

8. Der Behälter (80) nach dem vorhergehenden Anspruch, wobei ein Radius (r1) der äußeren abgerundeten Ecke kleiner ist als ein Radius (r2) der inneren abgerundeten Ecke.

9. Der Behälter (80) nach einem der vorhergehenden Ansprüche, wobei die winkelförmigen Verstärkungen (40) zwei gerade Arme (42) mit einer ersten Breite (w1) aufweisen, die sich im Wesentlichen rechtwinklig von einem Winkelteil (41) mit einer zweiten Breite (w2), die größer als die erste Breite ist, erstrecken.

10. Der Behälter (80) nach einem der vorhergehenden Ansprüche, wobei die winkelförmigen Verstärkungen (40) eine Dicke aufweisen, so dass, wenn der Behälter auf einen zweiten identischen Behälter gestapelt wird, die winkelförmigen Verstärkungen (40) des Behälters auf dem flachen Rand (50) des zweiten Behälters aufliegen.

11. Verfahren zur Herstellung eines Behälters für Lebensmittel (80), umfassend:
- Bereitstellen eines ersten papierbasierten Kartons mit einer koextrudierten Sperrschicht aus kompostierbarem Polymer,
- Thermoformen des ersten papierbasierten Kartons zu einem Behälter (80) mit flachem Rand (50),
- Bereitstellen eines zweiten papierbasierten Kartons mit einer koextrudierten, schweißbaren Schicht aus kompostierbarem Polymer,
- Schneiden einer Vielzahl von winkelförmigen Verstärkungen (40) aus dem zweiten papierbasierten Karton,
- thermisches Verschweißen der winkelförmigen Verstärkungen (40) unter dem flachen Rand (50), wobei die schweißbare Schicht aus kompostierbarem Polymer in Kontakt mit einer Unterseite des Randes steht, durch Anwendung von Wärme und Druck.

12. Das Verfahren nach Anspruch 11, wobei das kompostierbare Polymer der Sperrschicht und/oder der schweißbaren Schicht Polylactid ist.

13. Das Verfahren nach einem der Ansprüche 11-12, wobei die schweißbare Schicht eine Dicke aufweist, die größer ist als die Dicke der Sperrschicht.

14. Das Verfahren nach einem der Ansprüche 11-13, wobei der zweite papierbasierten Karton ein Flächengewicht zwischen 200 g/m2 und 800 g/m2 aufweist.

## Revendications

1. Conteneur (80) pour aliments avec un compartiment concave ou un receptacle concave pour recevoir une matière alimentaire et un bord plat (50), obtenu par le thermoformage d'une premier feuille à base de papier avec une couche barrière de polymère coextrudée, avec une pluralité de renforcement d'angle (40) soudés thermiquement au-dessous les coins du bord plat (50), dans lequel les renforcements d'angle (40) sont des éléments plat en forme d'angle d'une deuxième feuille à base de papier avec une couche soudable de polymère coextrudée.

2. Conteneur (80) selon la revendication précédente, conformé comme une barquette avec une forme essentiellement rectangulaire ou carrée.

3. Conteneur (80) selon l'une quelconque des revendications précédentes, dans lequel le polymère de la couche barrière et/ou le polymère de la couche soudable est acide polylactique.

4. Conteneur (80) selon l'une quelconque des revendications précédentes, dans lequel la couche barrière a une épaisseur comprise entre 10 µm and 60 µm.

5. Conteneur (80) selon la revendication précédente, dans lequel la couche soudable a une épaisseur supérieure à l'épaisseur de la couche barrière.

6. Conteneur (80) selon l'une quelconque des revendications précédentes, dans lequel la deuxième feuille à base de papier a un grammage compris entre 200 g/m2 and 800 g/m2.

7. Conteneur (80) selon l'une quelconque des revendications précédentes, dans lequel les renforcements d'angle (40) ont un coin externe arrondi et un coin interne arrondi.

8. Conteneur (80) selon la revendication précédente, dans lequel un rayon (r1) du coin externe arrondi est inférieur à un rayon (r2) du coin interne arrondi.

9. Conteneur (80) selon l'une quelconque des revendications précédentes, dans lequel les renforcements d'angle (40) ont deux bras droits (42) avec une première largeur (w1) s'étendant essentiellement à angle droit depuis une portion d'angle (41) avec une seconde largeur (w2) plus grande que la première largeur.

10. Conteneur (80) selon l'une quelconque des revendications précédentes, dans lequel les renforcements d'angle (40) ont une épaisseur telle que lorsque le conteneur est empilé sur un second conteneur identique les renforcements d'angle (40) posent sur le bord plat (50) du second conteneur.

11. Procédé de fabrication d'un conteneur pour aliments (80) comprenant :
- pourvoir une première feuille à base de papier avec une couche barrière de polymère coextrudée,
- thermoformer la première feuille à base de papier en un conteneur (80) avec un bord plat (50),
- pourvoir une deuxième feuille à base de papier avec une couche soudable de polymère compostable coextrudée,
- découper une pluralité de renforcement d'angle (40) de la deuxième feuille à base de papier,
- souder thermiquement les renforcements d'angle (40) sous le bord plat (50), couche soudable de polymère compostable en contact avec une face inférieure du bord par application de chaleur et de pression.

12. Procédé selon la revendication 11, dans lequel le polymère de la couche barrière et/ou le polymère de la couche soudable est acide polylactique.

13. Procédé selon l'une quelconque des revendications 11-12, dans lequel la couche soudable a une épaisseur supérieure à l'épaisseur de la couche barrière.

14. Procédé selon l'une quelconque des revendications 11-13, dans lequel la deuxième feuille à base de papier a un grammage compris entre 200 g/m2 and 800 g/m2.
